# EUROPEAN PATENT APPLICATION

(11) **EP 1 993 258 A1**
(43) Date of publication of application: **19.11.2008**
(21) Application number: 07301044.9
(22) Date of filing: 16.05.2007
(51) Int. Cl.: H04L 29/06

(54) **Method for file description information repair**

(71) Applicant: Thomson Licensing, Inc., 92100 Boulogne-Billancourt (FR)
(72) Inventor: Bichot, Guillaume, 35630 La Chapelle Chaussee (FR); Alleaume, Vincent, 35740 Pace (FR); Boudani, Ali, 35700 Rennes (FR); Bonnet, Frédéric, 35136 St Jacques de la Lande (FR)
(74) Representative: Ruellan-Lemonnier, Brigitte

(57) **Abstract**

The present invention concerns a terminal (1.7) and a method in the terminal for receiving a data file and a file description information, comprising, at the terminal, the steps of receiving at least a part of the data file (S1), the at least a part of the data file comprising an identifier, and sending a request (S3) for a part of a file description information corresponding to the received identifier, if no part of a file description information corresponding to the received identifier is available at the terminal. The invention also concerns a method at a repair server (1.2) comprising the steps of receiving data file and file description information emitted by at least a file server (1.1), receiving a request for a part of a file description information corresponding to an identifier of at least a part of a data file, and sending a response comprising the part of a file description information.

## Description

The present invention relates generally to a file repair method and in particular a method for file description information repair.

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A distribution of content between a server and multiple receivers requires either to set up a point-to-point connection between the server and each receiver, or a multipoint connection. The point-to-point connection permits to distribute the content in a unicast means to each receiver, and provides a robust distribution. However with a significant number of receivers, it requires a heavy management of the connections. It may also dramatically enhance the traffic over the network. The multicast distribution provides less network load, with a less robust distribution. When multicast distribution is used, a solution must be found for repairing errors in the reception; for example, by means of retransmission demands. As an example for multicast delivery of content, IETF RFC 3926 defines the File Delivery over Unidirectional Transport protocol, noted FLUTE. The protocol defined in this standard is well adapted to answer the problems of scalability in terms of number of clients and heterogeneity in terms of bandwidth supported by the clients.

The standard DVB-H IP Data-casting standard, «ETSI TS 102 472 V1.1.1 (2006-06), Digital Video Broadcasting (DVB); IP Datacast over DVB-H; Content Delivery Protocols (CDP) », noted CDP standard hereinafter, defines a file repair mechanism. The file repair strategy adopted in DVB-H IP Data-casting standard is a one level file repair strategy and adopts the centralized client-server "File Repair" mode. It uses a file repair mechanism to assist the FLUTE protocol for achieving reliable file delivery other broadcast/multicast networks. Once it has detected the reception of an incomplete file, the FLUTE receiver launches a file repair mechanism. It consists in requesting the packets that are missing or corrupted. According to the FLUTE terminology, these packets are named symbol. The request is sent to a repair file server using a point-to-point connection. The request gathers basically the name of the file to be repaired and the list of missing symbols.

The FLUTE protocol defines a File Delivery Table, noted FDT, which comprises file description information of the files which have to be transmitted within a file delivery session. FLUTE protocol transmits the FDT from the content server in a multicast mode to all the kiosks. As this may be subject to transmission error, the reliability of the FDT file transmission can be enhanced with mechanisms such as a forward error correction or with retransmissions of the FDT during the session, that are well known per se. So at the end of the multicast content delivery each kiosk knows exactly, the files which have to be transmitted in the session and the files which have been received. Each kiosk may then indicate to the index server the files that are missing.

The FLUTE standard missed to define a method for repairing a file for which the FDT has not been well received. The repair request gathers the name of the file to be repaired and of course this file name is retrieved by the receiver using the FDT; the receiver does not know the name of a received file, the URI Universal Resource Information, and how to register it.

The present invention concerns a system and a method for repairing the missing file description information.

To this end the invention relates to a method in a terminal for receiving a data file and a file description information, comprising, at the terminal, the steps of receiving at least a part of the data file, the at least a part of the data file comprising an identifier, and sending a request for a part of a file description information corresponding to the received identifier, if no part of a file description information corresponding to the received identifier is available at the terminal.

According to an embodiment, the method comprises the step of receiving the part of the file description information corresponding to the received identifier.

According to an embodiment, a file description information corresponds to data file transmitted during a file delivery session, and the method comprises the step of sending a request for the file description information corresponding to the file delivery session.

In particular, data file is received through the File Delivery over Unidirectional Transport protocol, and the set of file description information is the File Delivery Table.

According to an embodiment, the data is received through a broadband network.

According to an embodiment, the request and the response are transmitted on a return channel to a repair server.

The present invention also concerns a method in a repair server comprising the steps of receiving data file and file description information emitted by at least a file server, receiving a request for a part of a file description information corresponding to an identifier of at least a part of a data file, and sending a response comprising the part of a file description information.

According to an embodiment, the repair server is collocated with one of at least a file server.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

The invention will be better understood and illustrated by means of the following embodiment and execution examples, in no way limitative, with reference to the appended figures on which:
- Figure 1 is a block diagram of a system compliant with the embodiment;
- Figure 2 is a diagram of a method compliant with the embodiment;
- Figure 3 is a block diagram of a terminal compliant with the embodiment; and
- Figure 4 is a block diagram of a repair server compliant with the embodiment.

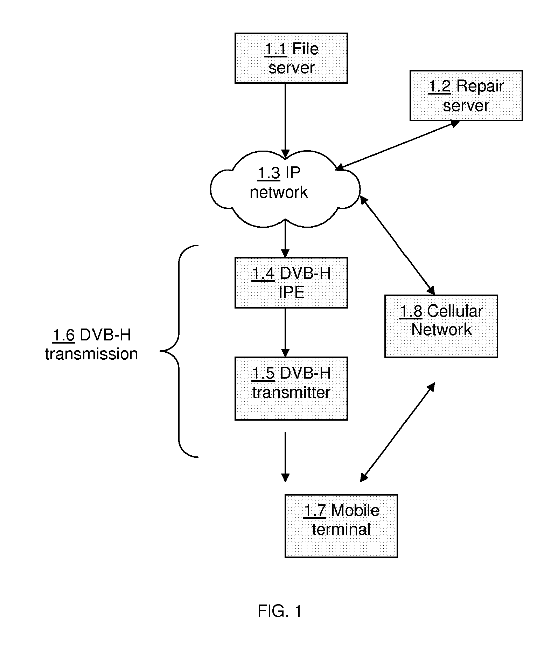

In Figures 1, 3 and 4, the represented blocks are purely functional entities, which do not necessarily correspond to physically separate entities. Namely, they could be developed in the form of software, or be implemented in one or several integrated circuits.

The exemplary embodiment comes within the framework of a transmission over a DVB-H network, but the invention is not limited to this particular environment and may be applied within any other multicast capable and bi-directional networks.

Figure 1 represents a system for video distribution according to the embodiment. The video broadcast network 1.6 is compliant with the ETSI TR 102 469 V1.1.1 (2006-05), "Digital Video Broadcasting (DVB); IP Datacast over DVB-H: Architecture", noted IP datacast standard hereinafter.

The file server 1.1 sends the video encoded into an uncompressed format or MPEG2 format into compressed audio/video/subtitling streams over RTP/RTCP. The video is for example encoded according to the IUT-T H.264 standard, audio is encoded according to the Advanced Audio Coding. The RTP streams are then delivered to the mobile terminal 1.7 over the IP network 1.3 and the DVB-H broadcast network 1.6. The IP network may be any IP network supporting multicast transmission, such as the Internet. The DVB-H transmission network comprises among others a DVB-H IPE 1.4 and a DVB-H transmitter 1.5. Of course, the embodiment is not limited to the DVB-H network. It could apply to any other broadband distribution network such as the digital subscriber line family.

The system also comprises a return channel through the cellular network 1.8. The Mobile terminal may receive and send data through the return channel, in particular interactive data. Of course, the return channel might be any other type of channel that provides a point-to-point bidirectional connection. The system is a simplified file repair infrastructure associated with DVB-H as defined in CDP standard. The terminal submits repair request(s) to a repair server 1.2 in order to recover packets (FLUTE symbols) detected as missing or corrupted. The repair server has a copy of the file that has been downloaded. The repair server sends back to the terminal the requested packets if available.

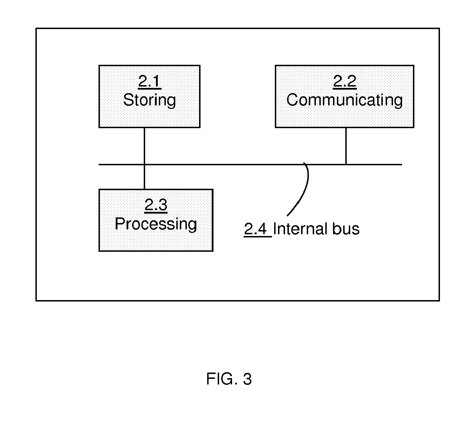

The terminal is represented on figure 3. According to the embodiment, it is a terminal compliant with IP datacast standard. It comprises a communicating module 2.2 for receiving data from the broadcast network, in particular the DVB-H network, and sending and receiving data on the return channel, in particular the cellular network. It comprises a storing module for storing data received from the broadcast channel, including FDT information. The terminal comprises a processing module, and an internal bus for allowing communication between modules. The terminal comprises an application, not represented, for performing the FDT repair mechanism according to the embodiment.

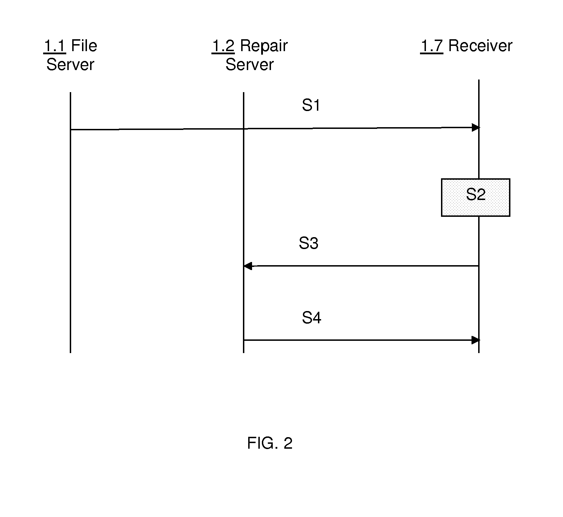

The figure 2 is a flow chart describing the FDT recovery method according to the embodiment.

At step S1, the receiver receives data file and FDT file from the file server 1.1.

At step S2, the terminal detects that FDT information related to a file is missing. It receives packets corresponding to a file, i.e. an object according to the FLUTE terminology, but there the terminal has no FDT information associated with the object. For this object, the receiver is unable to associate a file name, a file size and basically all information present in the FDT and associated with the FLUTE object. The terminal continues to receive the packets and attempts to rebuild the file.

In the meantime, at step S3, the terminal sends a repair request to the repair server in order to recover the FDT information associated with the object. The request is an HTTP request sent through the HTTP protocol. The request is sent through the return channel. At step S4, the repair server sends an HTTP response with the requested FDT information.

The format of the repair request as defined in the CDP standard, formatted according to ABNF grammar, is the following:
query = file_URI *("&" sbn_info)
file_URI = "fileURl=" URI-reference
sbn_info = "SBN=" sbn_range
...

A repair request comprises the URL as the file reference concerned by the reparation request and the list of FLUTE packet references to be repaired.

The format of the FDT request according to the embodiment is the following:
query = fiie_reference *("&" sbn_info)
fiie_reference = file_URI /FDT_info
.....
FDT_info = "fileFDT" 1 * ("&" TOI_info "&" TSI_info)
TOI_info = "TOI=" TOI
TSI_info = "TSI=" TSI
TOI= *10DIGIT
TSI = *10DIGIT

The FDT request comprises the FLUTE protocol object reference. This is the couple TSI/TOI as the file reference for which the terminal has no FDT information and possibly the list of FLUTE packets references to be repaired. The TSI information included in the FDT request represents the FLUTE Transport Session Identifier. The TOI, Transport Object Identifier, represents an object/file for a given TSI. The information provided by the terminal permits the server to retrieve the corresponding FDT.

Alternatively, the terminal might request the full FDT corresponding to the session, and not only the partial FDT associated with a particular file/object. In that case only the key word "fileFDT" is indicated in the FDT request.

The proposed format for encoding the FDT request is of course one example among a lot of different possibilities.

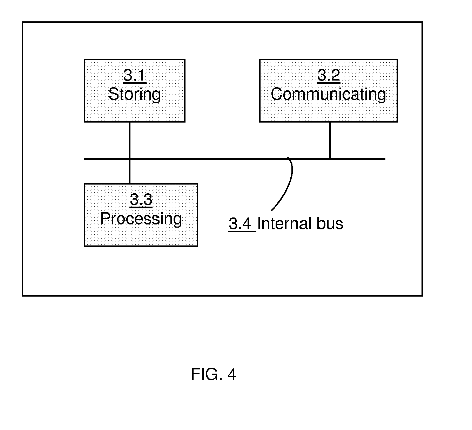

The server is represented in figure 4. It is compliant with the CDP standard. It comprises a communicating module for communicating with the terminal through the repair channel. It comprises a storing module for storing FDT information.

The repair server captures and stores all or a part of FDT information. It registers to all multicast sessions in order to retrieve all multicast traffic sent by the server. FDT information is kept by the repair server until an expiration time that is part of the FDT information. In particular data is transmitted to the network over IP multicast, and the repair server registers to all IP multicast sessions.

The repair server is located at the same device as the file server. Alternatively the repair server is not located at the same device as the file server. It is preferably connected to the file server through a connection that is reliable enough so that it correctly receives multicast packets. Alternatively the repair server acts as a repair server for more than one file server.

When a FDT request is received, the repair server sends a response to the terminal. This is an HTTP response. It comprises an XML fragment formatted according to the XML scheme defined in FLUTE for the FDT. The fragment comprises all or some FDT information related to the object/file to be repaired and if requested the list of claimed packets.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Method in a terminal (1.7) for receiving a data file and a file description information, comprising, at the terminal, the steps of:
- receiving (S1) at least a part of said data file, said at least a part of said data file comprising an identifier, and
- sending a request (S3) for a part of a file description information corresponding to said received identifier, if no part of a file description information corresponding to the received identifier is available at the terminal.

2. Method, according to the preceding claim, **characterized in that** it comprises the step of receiving (S4) the part of the file description information corresponding to said received identifier.

3. Method, according to claims 1 or 2, **characterized in that** a file description information corresponds to data file transmitted during a file delivery session, and that said method comprises the step of sending a request for the file description information corresponding to the file delivery session.

4. Method, according to any one of the preceding claims, **characterized in that** data file is received through the File Delivery over Unidirectional Transport protocol, and the set of file description information is the File Delivery Table.

5. Method, according to any one of the preceding claims, **characterized in that** said data is received through a broadband network.

6. Method, according to any one of the preceding claims, **characterized in that** the request and the response are transmitted on a return channel to a repair server.

7. Method in a repair server comprising the steps of:
- receiving data file and file description information emitted by at least a file server,
- receiving a request for a part of a file description information corresponding to an identifier of at least a part of a data file, and
- sending a response comprising said part of a file description information.

8. Method, according to the preceding claim, **characterized in that** said repair server is collocated with one of at least a file server.

9. Computer program product, **characterized in that** it comprises program code instructions for executing the steps of the process according to claims 1 to 6 when said program is executed on a computer.
